# EUROPEAN PATENT SPECIFICATION

(11) **EP 3 089 056 B1**
(45) Date of publication and mention of the grant of the patent: **12.12.2018**
(21) Application number: 16166453.7
(22) Date of filing: 21.04.2016
(51) Int. Cl.: G06F 17/30

(54) **METHOD AND DEVICE FOR PERSONALISED INFORMATION DISPLAY**
VERFAHREN UND VORRICHTUNG FÜR PERSONALISIERTE INFORMATIONSANZEIGE
PROCÉDÉ ET DISPOSITIF D'AFFICHAGE D'INFORMATIONS PERSONNALISÉES

(30) Priority: 29.04.2015 CN 201510213472
(43) Date of publication of application: 02.11.2016
(73) Proprietor: Xiaomi Inc., Beijing 100085 (CN)
(72) Inventor: WANG, Xingchao, 100085 Haidian District (CN); PENG, Yanhuan, 100085 Haidian District (CN); JI, Hong, 100085 Haidian District (CN)
(74) Representative: Sadler, Peter Frederick

(56) References cited:
- EP-A1- 1 302 869
- WO-A1-2014/185986
- US-A1- 2012 083 237
- US-A1- 2012 131 020

## Description

### FIELD

The disclosure relates to intelligent devices and technology, and particularly relates to a method and device for automatically obtaining and displaying a set of information specific to a user.

### BACKGROUND

With the development of the internet, users can find various kinds of information currently needed by accessing the network from a terminal, which greatly facilitates their life and work.

For the moment, there are two ways to search for information. On the one hand, users need to access the designated websites or searching engines, and seek the needed information on the webpage; on the other hand, they need to download various kinds of applications to search for information in advance, and then load the applications to query the needed information.

PCT application WO 2014/185986 describes a method for determining a triggering event of a user and selecting media relevant to the triggering event to be presented to the user. A triggering event of the user is determined based on the identified data of the user, and certain media are identified, selected, and provided to the user based on the triggering event. The user's data or state information are therefore continuously monitored and informed to the system and are used by the system to determine a triggering event.

### SUMMARY

The present inventors have appreciated that users of smart devices and the Internet may need to access a particular set of information from various information sources according to their current status or situation. A user's current state may be one of a set of predefined states that are differentiated by time, date and location, among other parameters. The set of information provided to a user may need to be adapted for each state. However, obtaining information manually from various sources for a particular state is inefficient.

The embodiments of the disclosure provide a method and device for information broadcast to resolve the related technical problems. The solutions are as below.

In accordance with a first aspect of the present disclosure, a method for outputting information to a user is provided for smart devices, the method comprising: determining whether an event is triggered by monitoring triggering information; if the event is triggered, automatically determining the user's current state, or life pattern, by selecting from a plurality of predefined states based on the triggering information; automatically acquiring a set of information corresponding to the determined state; and outputting the information.

Optionally, the determining whether a predetermined event is triggered comprises: checking whether the system time reaches a predetermined time, and if the system time reaches a predetermined time, determining that the scheduled event is triggered; checking whether a communicative connection is established with a smart wearable device, and if established, determining that the scheduled event is triggered; or checking whether the triggering information sent by the connected smart wear equipment is received, and if received, determining that the scheduled event is triggered.

Optionally, the acquiring current life pattern experienced by a user comprises: acquiring current time information, querying the relationship between the time information and a life pattern, and getting the current life pattern experienced by the user; or acquiring the triggering information sent by the connected smart wear equipment, querying the relationship between the triggering information and the life pattern, and getting the current life pattern experienced by the user.

Optionally, the life pattern is user-defined, and includes workday pattern, holiday pattern, and health pattern.

Optionally, the acquiring the broadcast information in accordance with the life pattern comprises: acquiring at least one or more of weather, news, or traffic information, if the life pattern is workday pattern; acquiring at least one or more of weather, shopping, dining, news, traffic information, music, or radio, if the life pattern is holiday pattern; and searching for related health information according to the user's healthy information before, if the life pattern is healthy pattern.

Optionally, the method may further comprises: if the status of the connection with the smart wear equipment is connected, and the state is on standby, switching it to be in work; or if the status of the connection with the smart wear equipment is disconnected, and the state is in work, switching it to be on standby or power-off.

According to a second aspect of the present disclosure, a device for information broadcast is provided for smart TVs or home audio equipment, comprising: determining module, used to determine whether a scheduled incident or event is triggered by automatically monitoring triggering information; a first acquisition module, configured to determine the user's current state, or life pattern, by selecting from a plurality of predefined states based on the triggering information if the event is triggered; and a second acquisition module, configured to automatically obtain a set of information corresponding to the determined state and associated with the current activity type; and playing module, used to play the broadcast information.

Optionally, the determining module comprises: a first determination unit, used to detect whether the system time reaches a predetermined time, and if the system time reaches a predetermined time, determine that the scheduled event is triggered; a second determination unit, used to detect whether a communicative connection is established with the smart wear equipment, and if established, determine that the scheduled event is triggered; and a third determination unit, used to detect whether the triggering information sent by the connected smart wear equipment is received, and if received, determine that the scheduled event is triggered.

Optionally, the first acquisition module comprises: a first acquisition unit, used to acquire the current time information, and query the relationship between the time information and the life pattern to get the user's current life pattern; and a second acquisition unit, used to acquire the triggering information sent by the connected smart wear equipment, and query the relationship between the triggering information and the life pattern to get the user's current life pattern.

Optionally, the life pattern is user-defined, which includes holiday pattern, holiday pattern and healthy pattern.

Optionally, the second acquisition module comprises: a third acquisition unit, used to acquire one or more of weather, news or traffic information if the life pattern is workday pattern; a fourth acquisition unit, used to acquire one or more of weather, shopping, dining, news, traffic information, music or video if the life pattern is holiday pattern; and a fifth acquisition unit, used to search for health information related to the user's healthy data before if the life pattern is healthy pattern.

Optionally, the device further comprises: a first switch module, used to switch the status to be in work if it is connected to the smart wear equipment and its status is on standby; and a second switch module, used to switch the status to be standby or power-off if it is disconnected to the smart wear equipment and its status is in work.

According to a third aspect of the present disclosure, a device for information broadcast is provided for smart TV or home audio equipment, the device comprising: processor, memory, used to store the instructions executed by the processor; wherein the processor is configured to: perform the method according to the first aspect.

The technical solutions provided in the embodiments of the disclosure may have the advantages below. By the claimed means, the related information is acquired and shown to the user automatically according to the life pattern, and the user need not search for the information, which enhances the efficiency to get the information. It should be appreciated that the general description above and the details below are only for example and explanation, and not used to restrict the disclosure. The broadcast information related to the life pattern may be acquired in accordance with the location information by acquiring the current life pattern, and subsequently shown on the display of the smart equipment.

### BRIEF DESCRIPTION OF THE DRAWINGS

The drawings herein are incorporated into the specification and as a part of the specification, which illustrates the embodiments consistent with the disclosure, and is used to illuminate the principles of the disclosure together with the specification.
FIG. 1 illustrates the flowchart of a method for information broadcast in accordance with an exemplary embodiment;
FIG. 2 illustrates the flowchart of a method for information broadcast in accordance with an exemplary embodiment;
FIG. 3 illustrates the flowchart of a method for information broadcast in accordance with an exemplary embodiment;
FIG. 4 illustrates the flowchart of a method for information broadcast in accordance with an exemplary embodiment;
FIG. 5 illustrates the block diagram of a device for information broadcast in accordance with an exemplary embodiment;
FIG. 6 illustrates the block diagram of the determination model for a device of information broadcast in accordance with an exemplary embodiment;
FIG. 7 illustrates the block diagram of a first acquisition model of a device for information broadcast in accordance with an exemplary embodiment;
FIG. 8 illustrates the block diagram of a second acquisition model of a device for information broadcast in accordance with an exemplary embodiment;
FIG. 9 illustrates the block diagram of a device for information broadcast (the general structure of a smart equipment) in accordance with an exemplary embodiment.

### DETAILED DESCRIPTION

To clarify the purpose, means and advantages of the disclosure, the embodiments will be described in further details along with the drawings as below.

Described below are solutions to automatically and adaptively obtain information by a smart device for a user based on varying user states. A user state generally characterizes a particular environment that the smart device and/or the user are in, which are defined based on particular parameters. A plurality of user states may each be defined based on date, time, location, and other factors as described herein. For example, 8am of a holiday at home may be defined as one state; 6pm of a workday at home may be defined as another state. Each state may correspond to a set of particular information that the user may be interested in knowing, viewing, or listening to when they are in the particular situations or status defined by the state. A user's state may change in time and/or location. A user thus may be in any one of a plurality of states each corresponding to a set of adaptive information that may be of interest. For example, if the particular time and location is a workday morning at home, then it may be desirable for the user to be informed of the outside weather, some particular morning news items, and the local traffic condition from home to the user's workspace. The smart device may automatically acquire the set of adaptive information corresponding to any particular status from the networks once the smart device determines that the particular settings corresponding to a given predefined state (e.g., time and/or location condition) are present. The set of adaptive information is subsequently rendered by the smart device to the user. The set of adaptive information may be from a combination of various sources. For example, some information within the set of adaptive information may be downloaded from a website while some other information within the set of adaptive information may be from a broadcasting source such as a TV station, a radio station, or an Internet broadcasting source. By this means, the user need not search for the set of information manually and adaptive sets of information may be automatically rendered to the user as the user transitions from one state to another. The term "render" may be applied to various types of contents including but not limited to images, videos, audios, and websites.

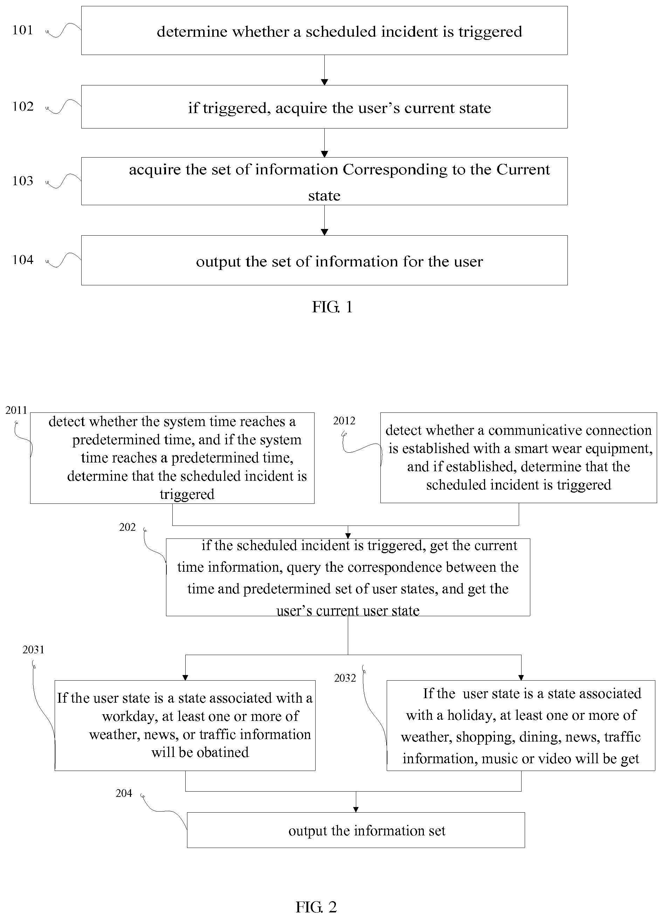

A method for information broadcast is provided in an exemplary embodiment, which applies to a user device such as smart TVs or home audio equipment. Referring to FIG. 1, the flowchart includes:
in step 101, determining whether a scheduled incident or event is triggered;
in step 102, acquiring the user's current state if the event is triggered;
in step 103, acquire the set of information corresponding to the current state; and
in step 104, output the set of information for the user.

In the embodiment, the current user state is acquired, the set of information corresponding to the current user state is acquired and is subsequently shown to the user. Therefore, the information corresponding to the a particular user state, from a plurality of predefined states ,can be gained and shown to the user automatically without searching by the user, which improves the efficiency for the user to get the information.

A predefined set of user states may indicate particular activity types undertaken by a user at a given date and time. Examples are given below. A current user state may refer to the particular current activity type defined within the predefined set of user states. As an example, activity types, or user states, may be scheduled over particular periods of time on a given day according to a user defined schedule. The current user state may therefore be determined based on a predetermined schedule of states, although other methods for determining the current user state are possible, as described below.

Referring to FIG. 2, a method for automatically obtaining information, such as broadcast information, to a user is provided in another exemplary embodiment, which may apply to user devices such as smart TVs or home audio equipment.

It should be noted that the smart equipment performs the function of playing information according to a scheduled event that it has detected automatically in the embodiments of the disclosure.

In step 201, it is determined whether the scheduled event is triggered.

There may be two ways to determine that the scheduled event is triggered in the embodiments, and the step can be executed by either of the two steps below.

The first way to determine that the scheduled event is triggered is as below.

In step 2011, it is detected whether the system time reaches a predetermined time, and if the system time reaches the predetermined time, the scheduled event is triggered.

The predetermined time, corresponding to one of a set of predefined user states, is stored in the smart equipment. The scheduled event is triggered if the system time reaches the predetermined time corresponding to the predefined user state.

Wherein the predetermined time may comprise the date and time, and the predetermined time may include, or be associated with, data indicating a classification of the date, such as whether the date is a workday or a holiday/leisure day.

The scheduled event may be triggered directly if the smart equipment detects that the predetermined time is reached. If the predetermined time is detected to be reached, the smart equipment can also query the system calendar to confirm the date of the day, and match the date with that of the predetermined time. If matched, the scheduled event will be triggered, otherwise no action is taken.

The second way to determine that the scheduled event is triggered is as below.

In step 2012, it is detected whether a communicative connection is established with a wearable smart device. If a connection is established, the scheduled event is triggered.

When the user, wearing their smart wearable device, moves within communication distance of the smart equipment, for example when they return home, a communicative connection is established between the smart equipment and the smart wearable device according to a predefined communication protocol, which may be a Bluetooth or a Wi-Fi (Wireless-Fidelity) connection for example.

By this means, the smart equipment and the smart wearable device are paired in a predefined way according to a predefined method of communication, after which they store their respective identifications so as to set up a relationship between them.

In step 202, the current time is obtained, correspondence between the time and the predetermined set of user states is queried, and the current user state according to the user's current state is determined when the scheduled event is triggered.

Since the types or natures of activities carried out by a user on a workday are different to those on a holiday or leisure day, the set of information needed is different too. Thereby, the date of the current day needs to be determined firstly, and then the user state is determined. For example, if the date is a workday, it is needed to acquire the current weather, news and traffic information (such as the traffic between home and the user's work location), which make up the associated set of information, and if the date is a holiday or leisure day, it is needed to get the weather, news, shopping and dining information, which make up the set of associated information, while the traffic information is not needed. The smart equipment may acquire the date of every day of the current year from a cloud based server over the internet in advance, and get the relevant date of the current day from the system calendar in that step, or the smart equipment may acquire the date of the current day from the cloud server over the internet in that step.

Thereby, the time information may include the date and the time, where the date may include, or be associated with, data indicating whether the particular date is a workday or holiday/leisure day. Accordingly, the plurality of user states may be user-defined set of user states, which include a workday set and holiday set.

Furthermore, the user's state may also be different at different times every day. For example as a first state, if the date is workday, and the time is 8 am, it is needed to get the weather, news and traffic information (such as the traffic between home and the user's place of work), as the associated set of information, and as a second state, if the date is a workday, and the time is 6 pm, it is needed to get the news and dining information as the associated set of information.

So the user states associated with workdays or holidays can further be subdivided into several specific states as exemplified below:
if the time is between 7:30 am and 8:30 am on a workday, it would be the "getting up" state of a workday;
if the time is between 17:30 pm and 19:30 pm on a workday, it would be the "supper" state of a workday;
if the time is between 19:30 pm and 24:00 pm on a workday, it would be the "rest" state of a workday;
if the time is between 8:00 am and 9:00 am on a holiday day, it would be the "getting up" state of a holiday day;
if the time is between 9:00 am and 12:00 am on a holiday day, it would be the "leisure" state of a holiday day;
if the time is between 12:00 am and 13:00 pm on a holiday day, it would be the "lunch" state of a holiday day;
if the time is between 13:00 pm and 17:00 pm on a holiday day, it would be another "leisure" state of the holiday day;
if the time is between 17:00 pm and 19:00 pm on a holiday day, it would be the "supper" state of the holiday day;
if the time is between 19:00 pm and 24:00 pm on a holiday day, it would be the "rest" state of the holiday day.

In step 203, the information set is acquired corresponding to the particular user state scheduled.

Optionally, since the user may be at different location, it is needed to determine the broadcast information related to the location based on the user's location. So the smart equipment may obtain the current location in advance.

The location of the smart device may be determined by a positioning module of the smart device. The positioning module may be based on GPS technology. It may alternatively be based on other technologies such as Wi-Fi positioning, cellular positioning technology, or a combination thereof. Alternatively, a procedure for the smart device to obtain location information may be executed when initializing the smart device. The smart device may further refine the location information for better precision during step 203 even though some location information is obtained by the smart device during initialization. The location may be determined by orientating via an orientational module of the smart equipment. The smart equipment sends the request to obtain the desired information, and the request carries the location and identification corresponding to the user state. Optionally, the request to get the broadcast information may also carry the user's ID or the ID of the smart equipment. Optionally, the process for the smart equipment to obtain the information set may be executed in the step of initializing the smart equipment. The smart equipment may also obtain the location information in the step to determine the location more precisely.

Additionally, the request to obtain the broadcast information may be sent to the cloud server by the smart equipment, the request carrying the IP address of the smart equipment. Alternatively, or in addition, the request to obtain the broadcast information may further carry the user's ID or the ID of the smart equipment. The cloud server queries an approximate location according to the IP address in the request, and then obtains the broadcast information according to the approximate location.

The information making up a given information set in the embodiments of the disclosure may include, but is not limited to, weather, news, traffic, shopping, dining information, music or video.

Accordingly, the set of information corresponding to the user state in the step may be:

if the user state is a state associated with a workday , at least one or more of weather, news or traffic information;

if the user state is a state associated with a holiday, at least one or more of weather, shopping, dining, news, traffic information, music or video.

Therefore, the sets of information obtained for a given user state may be different depending upon whether the user state is occurring on a day of a first or second predetermined type. In this case, the sets of information obtained for a user state on a workday may be different to the sets of information obtained on a holiday or leisure day.

There are different ways to obtain the information making up each information set as described below. The type of information to obtain in accordance with each user state may be defined in the smart equipment in advance, and the type of information may be carried in the request. On the other hand, the relationship between the user state and the information set may also be stored beforehand in the cloud server, which determines the type of information to obtain by the identification of user state carried in the request to obtain the information, and then performs the process to obtain the information making up the information set. Optionally, the smart equipment may already have stored thereon, or accessible to it, at least a portion of the information making up the information set. For example, if the user state is the "getting up" state of a workday, the corresponding set of information may include the audio of an alarm clock for getting up, which is stored in the smart equipment beforehand.

The cloud server may determine the information set corresponding to the user's location via the location information. Alternatively, or in addition, if the request to obtain the information further carries the user's ID or the ID of the smart equipment, a travel route associated with the user, stored in advance, may be queried according to the user's ID or the ID of the smart equipment, and the traffic information corresponding to the route will be obtained as a part of the information set.

Optionally, if the smart equipment is home audio equipment, the cloud server may make sure the acquired broadcast information is audio by the ID of the smart equipment carried in the request to get the broadcast information, and the acquired information set involves traffic, weather, news and the like in audio format via voice.

Optionally, the users may define the set of information for a given user state to obtain by themselves according to their actual need. By obtaining the user's ID or the ID of the smart equipment carried in the request to obtain the information, the cloud server may determine the type of user-defined information and obtain the corresponding information set.

Therefore, step 203 may be executed by the following steps:
in step 2031, if the user state is a state associated with a workday, at least one or more of weather, news or traffic information will be obtained;
in step 2032, if the user state is a user state associated with a holiday, at least one or more of weather, shopping, dining, news, traffic information, music or video will be obtained.

In step 204, the information set is output.

If the smart equipment is a smart TV, when the smart TV plays TV shows or other video, the information set may be shown in a designated area on the screen of the smart TV. Wherein, each piece of the information making up the set may be shown in the display order, and each piece of information may be cancelled after showing for a predetermined time to show the next piece of information.

If the smart equipment is home audio equipment, the information set obtained is in an audio format, which will be decoded and played.

An example will now be given to show how to display the information set.

If the current date is a workday, the time is half past seven, and the predetermined time is half past seven on a workday, then the smart TV detects that a scheduled event is triggered according to the system time, and determines that the current user state is the "getting up" state of a workday according to the current time. The smart TV then obtains the information set corresponding to the "getting up" state of a workday, i.e., the audio of the alarm clock for getting up, and plays the audio to remind the user to get up.

In the embodiments of the disclosure, the current user state is acquired by detecting whether the predetermined time is reached and/or whether the communication connection between the smart device and the wearable smart device is established. After that, the information set corresponding to the current user state is obtained and subsequently shown. In this way, the corresponding information according to the user state is obtained and shown to the user automatically, and the users need not search for the information by themselves, which enhances the efficiency for the user to get the information.

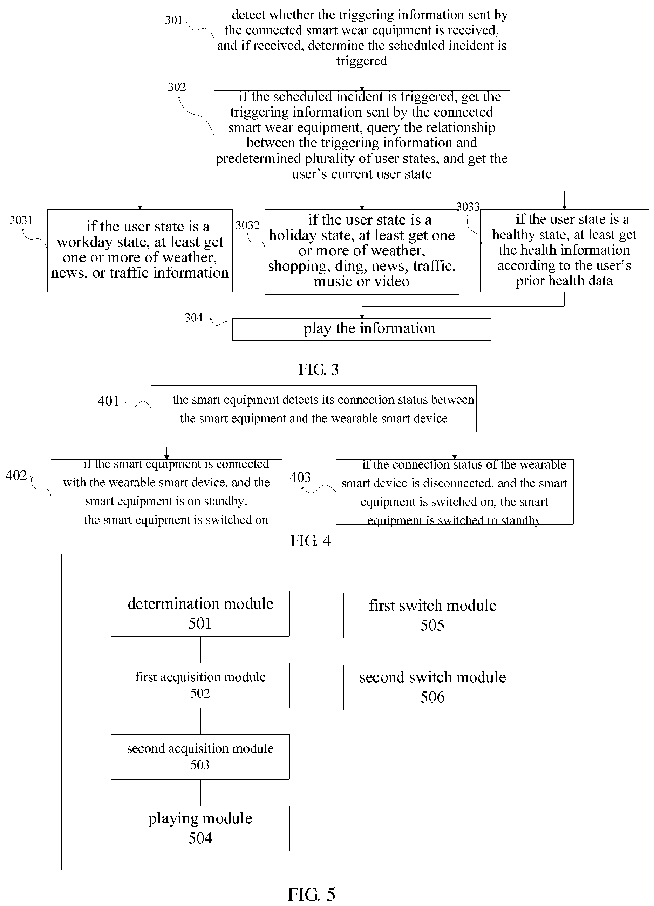

Referring to FIG. 3, a method to output information is provided in an exemplary embodiment of the disclosure, which applies to devices such as smart TVs or home audio equipment.

It should be noted that the smart equipment plays the information by triggering the scheduled event via the triggering information sent by a wearable smart device.

In step 301, it is detected whether the triggering information sent by the connected wearable smart device is received. If received, the scheduled event is triggered.

The triggering information sent by the smart wearable equipment may include, but is not limited to one of sleeping data, sports data, dinning data, health data, and so on. For example, the smart wearable equipment may detect and record sleeping data of the user wearing the wearable equipment. Those of ordinary skill in the art understand that the smart wearable equipment may be installed with various sensors and circuits for the detection and recording of sleeping data. The smart wearable equipment may further determine the awakeness state of the user according to the sleeping data. The awakeness state may be one of light sleeping state, deep sleeping state, and waking-up state. The smart wearable equipment may also detect dinning activities of the user and send information indicating that the user is dinning. Similarly, the smart wearable equipment may be installed with sensors for detecting sporting data related to sport activities, for example, running, jogging, and weight lifting. The smart wearable equipment may send information containing the sporting or activity status of the user. In addition, the smart wearable equipment may sense health related data, such as one or more of blood pressure, heart rate and body temperature of the user and may send information that indicates the health status of the user.

In step 302, the triggering information sent by the wearable smart device is acquired if the scheduled event is triggered, and the relationship between the triggering information and the predetermined plurality of user state is queried to obtain the current user state. For example, the current user state may be determined according to a mapping between various triggering information and the plurality of predefined user states. For example, the user's current health status may be determined via the various data in the triggering information sent from the smart wearable equipment, and a corresponding user state suitable for the health status may be selected from the set of user states. The set of user states may be constructed to cover a wide range of possible user states and working scenarios that a user may encounter.

The user's current health status may be determined via the triggering information, and the corresponding user state may include a set of user states associated with workdays, a set of user states associated with holidays and a set of user states associated with health activities.

The relationship between the triggering information and the user state may include, but is not limited to:
If the triggering information indicates a "waking up" state, the corresponding user state would be a "getting up" state;
if the triggering information indicates a sporting state, whereby the user is engaged in sporting activity based upon determinations by the wearable smart device, the corresponding user state would be a "sports and health information recommending" state, whereby the information provided is related to sports and health information;
if the triggering information indicates a diet state, the corresponding user state would be a "diet and health information recommending" state.

Additionally and similar to previous description of the embodiment in FIG. 2, the plurality of predefined user states may be further refined to sub categories according to the current date. For example, if the current day is a workday, the getting-up user state may be refined to a workday getting-up user state whereas if the current day is a holiday, the getting-up user state may be refined to holiday getting-up user state. Similarly, a sporting user state may be refined to a workday sporting user state and a holiday sporting user state. The different states may be associated with different sets of information.

Optionally, the subdivided patterns may be determined in cooperation with the current date. For example, if the date is a workday, the "getting up" state may be refined to be "getting up on a workday" to get the corresponding traffic information, etc.

In step 303, the information making up the information set corresponding to the user state is obtained.

Alternatively, or in addition, if the user lives at different locations, it is needed to determine the broadcast information related to the location based on the user's location, and thus the smart equipment needs to acquire the current location in advance.

The location may be determined as described above by a positioning module of the smart device. The smart equipment sends the request to get the information, which carries the location and identification corresponding to the user state. Optionally, the request to get the broadcast information may also carry the user's ID or the ID of the smart equipment. Optionally, the process for the smart equipment to get the broadcast information may be executed in the step of initializing the smart equipment. The smart equipment may also get the location information in the step to determine the location more precisely.

Additionally, the request to get the broadcast information may be sent to the cloud server by the smart equipment, wherein the request may carry the IP address of the smart equipment. Alternatively, or in addition, the request to get the broadcast information may further carry the user's ID or the ID of the smart equipment. The cloud server queries an approximate location according to the IP address in the request, and then gets the broadcast information by the approximate location.

Wherein, in the embodiments of the disclosure, the broadcast information may include, but is not limited to, weather, news, traffic, shopping, or dining information, health information, music and video content.

Accordingly, the broadcast information corresponding to the user state in the step may be listed as below.

If the user state is a workday state, at least one or more of weather, news or traffic information is obtained.

If the user state is a holiday state, at least one or more of weather, shopping, dining, news, traffic information, music or video is obtained.

There may be different ways to obtain the information making up the information set as below. The type of information to be obtained corresponding to each user state activity type may be predefined in the smart equipment, and the type of information may be carried in the request to obtain the information. The relationship between a given user state and the type of information may be stored beforehand in the cloud server, which determines the type of information to obtain by the identification of the user state carried in the request, and then performs the process to obtain the broadcast information.

The cloud server may determine the information corresponding to location via the location information. Optionally, if the request to obtain the broadcast information further carries the user's ID or the ID of the smart equipment, the travel route stored in advance and associated with the user will be queried according to the user's ID or the ID of the smart equipment, and the traffic information corresponding to the route will be a part of the information.

If the smart equipment is home audio equipment, the cloud server may make sure the acquired information is audio by the ID of the smart equipment carried in the request to get the broadcast information, and the acquired information involves traffic, weather, news and so on.

Optionally, the users may define the type of information to obtain by themselves according to their actual need. By obtaining the user's ID or the ID of the smart equipment carried in the request to obtain the broadcast information, the cloud server may determine the type of user-defined information and obtain the associated broadcast information.

Accordingly, step 303 may be executed by the following steps:
in step 3031, if the user state is a workday state, at least one or more of weather, news or traffic will be obtained;
in step 3032, if the user state is a holiday state, at least one or more of weather, shopping, dining, news, traffic information, music or video will be obtained;
in step 3033, if the user state is a health activity state, the related health information will be obtained according to the user's prior health data.

In step 304, the information is played or output for the user to consume.

If the smart equipment is a smart TV, when the smart TV plays TV shows or other video, the information may be shown in a designated area on the screen of the smart TV. Wherein, each piece of the information may be shown in the display order, and each piece of information may be cancelled after a predetermined time to show the next piece of information.

If the smart equipment is home audio equipment, the information obtained may be in audio format, which will be decoded and played.

An example will now be given to show how to output the broadcast information.

If the current date is a workday, and the time is half past seven, the wearable smart device determines that the user has woken up according to detected sleep data, and sends the sleep data to the smart TV as triggering information. The scheduled event is triggered by the smart TV, which determines the current user state is a "getting up" state of a workday according to the triggering information. After that, the information corresponding to the "getting up" state of a workday, such as news, weather or traffic information, will be acquired and shown on the screen of the smart TV.

When the user is bodybuilding on fitness equipment, the wearable smart device detects the related sports information and sends it to the smart TV as the triggering information. In response the smart TV determines the scheduled event is triggered, and the smart TV determines the current user state to be a "sports and health recommending" state by the triggering information. After that, the information, such as sports or bodybuilding information, which is associated with the "sports and health recommending" state, is acquired according to the user's prior sports data as well as the current sports data and is shown on the screen of the smart TV.

In the embodiments of the disclosure, the current user state is acquired by detecting whether a predetermined time is reached or whether the communicative connection between the smart equipment and the smart wearable equipment is established. After that, the broadcast information corresponding to the particular user state is obtained and shown. In this way the corresponding information according to the user state is obtained and shown to the user automatically, and the users need not search for the information by themselves, which enhances the efficiency for the user to obtain the information.

Referring to FIG. 4, a method for outputting information is provided in an exemplary embodiment of the disclosure, which applies to smart TVs or home audio equipment.

It should be noted that in the embodiments of the disclosure, the smart equipment determines the state itself by detecting the connection with other wearable smart devices. Wherein the smart equipment may include, but is not limited to, smart TVs, smart phones, tablets and the like. The wearable smart devices may include, but are not limited to, smart watches, smart bracelets etc.

In step 401, the smart equipment detects the connection status between the smart equipment and the wearable smart device.

In step 402, if the smart equipment is connected with the wearable smart device and the smart equipment is on standby, the smart equipment is switched on.

Take the smart bracelet for example. When the user gets into the house, the smart bracelet is connected to the home network appliance, as well as other smart equipment correspondingly, such as the smart TV. When the smart bracelet is connected to the home network, it may send a request to the smart TV in the network to establish a connection, and after the process to establish the connection, the connection status between the smart TV and the smart bracelet will be "connected".

In step 403, if the connection status of the wearable smart device is disconnected, and the smart equipment is switched on, then the smart equipment is switched to standby or power-off.

Take the smart bracelet for example. When the user is away from the house, the smart bracelet will be disconnected from the home network appliances, and disconnected from other smart equipment correspondingly, such as the smart TV. The connection status between the smart TV and the smart bracelet may be determined to be disconnected by detecting the heartbeat signal between the smart TV and the smart bracelet. In other words, if the smart TV can't receive the heartbeat signal sent from the smart bracelet, the smart TV determines that the connection status between the smart TV and the smart bracelet is disconnected.

In the embodiments of the disclosure, the state of the smart equipment is controlled by detecting the connection status with the wearable smart device, which enhances the control efficiency of the smart equipment.

Referring to FIG. 5, in accordance with the method for playing information provided in the above exemplary embodiment, a device to output information is provided in another exemplary embodiment of the disclosure, which applies to smart TV or home audio equipment. The device includes:
determining module 501, used to determine whether a scheduled event is triggered;
a first acquisition module 502, used to acquire the user's current user state if the scheduled event is triggered;
a second acquisition module 503, used to acquire the set of information corresponding to the acquired or determined user state;
playing or output module 504, used to output the set of information.

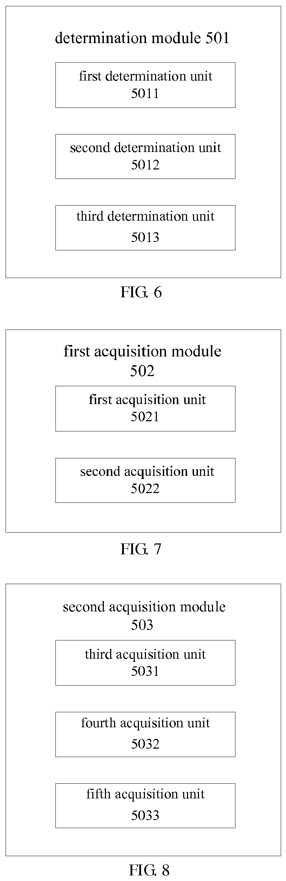

As shown in FIG. 6, the determining module 501 may include one or more of:
a first determination unit 5011, used to detect whether the system time reaches a predetermined time, and if the system time reaches a predetermined time, determine that the scheduled event is triggered;
a second determination unit 5012, used to detect whether a communication connection is established with a wearable smart device, and if established, determine that the scheduled event is triggered;
a third determination unit 5013, used to detect whether the triggering information sent by the connected wearable smart device is received, and if received, determine that the scheduled event is triggered.

Referring to FIG. 7, the first acquisition module 502 may include:
a first acquisition unit 5021, used to acquire the current time, and query the relationship between the time and a set of predefined user states to obtain the user's current user state;
a second acquisition unit 5022, used to acquire the triggering information sent by the connected wearable smart equipment, and query the relationship between the triggering information and a set of predefined user states to determine the user's current user state.

Wherein, the set of predefined user states are user-defined, and optionally includes holiday states, work states, sleep states, health activity states and so on.

Referring to FIG. 8, the second acquisition module 503 may include:
a third acquisition unit 5031, used to acquire a first set of information, for example comprising one or more of weather, news or traffic information if the determined current user state is a workday state;
a fourth acquisition unit 5032, used to acquire a second set of information, for example comprising one or more of weather, shopping, dining, news, traffic information, music or video content if the current user state is a holiday state;
a fifth acquisition unit 5033, used to search health information related to the user's prior or current health data if the current user state is a health activity state.

Wherein, the device further includes:
a first switch module 505, used to switch the status to be "on" if it is connected to the wearable smart device and its status is on standby;
a second switch module 506, used to switch the status to be standby or power-off if it is disconnected from the wearable smart device and its status is "on".

In the embodiments of the disclosure, the information corresponding to the user state is acquired and subsequently output for the user by acquiring the current user state. In this way, the corresponding information is acquired and shown to the user automatically according to the user state, and the user need not search for the information, which enhances the efficiency to get the information.

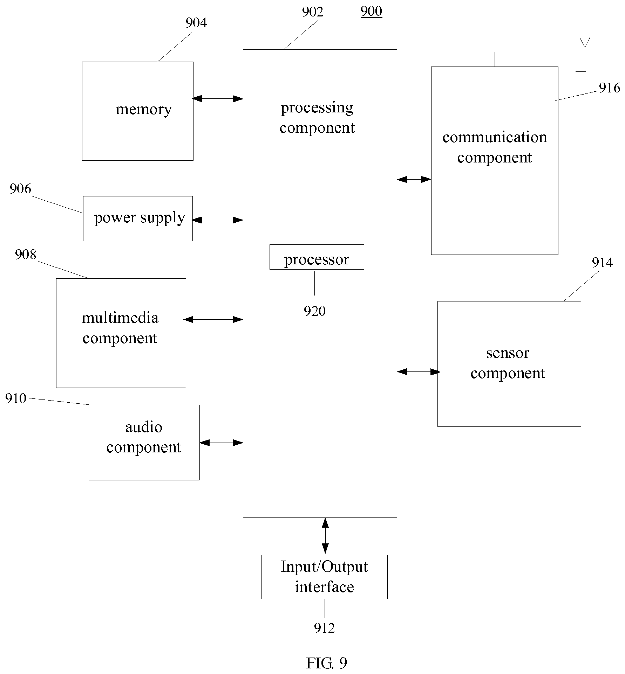

Referring to FIG. 9, in another exemplary embodiment of the disclosure, in accordance with the device for outputting information provided in the above exemplary embodiment, a device 900 for playing information is provided. For example, the device 900 may be a mobile phone, computer, digital broadcasting terminal, message transceiver, game console, tablet, medical equipment, bodybuilding equipment, PDA and the like. Alternatively, the device 900 may further be a smart TV etc.

Referring to FIG. 9, the device 900 includes one or more of processing component 902, memory 904, power component 906, multimedia component 908, audio component 910, input/output (I/O) interface 912, sensor component 914 and communication component 916.

The processing component 902 generally controls the operations of the device 900, such as the operations associated with display, call, data communication, camera execution and record. The processing component 902 may include one or more processors 920 to execute the instructions to perform some or all of the operations of the above method. Additionally, the processing component 902 may comprise one or more modules to perform the interaction between the processing component 902 and other components. For example, the processing component may include a multimedia module to facilitate the interaction between the multimedia module 908 and the processing component 902.

The memory 904 is configured to save various kinds of data to support the operations of the device 900. The examples of these data include the instructions of any applications or method executed in the device 900, contacts, phonebook, message, picture, video and the like. The memory 904 may be implemented by any kinds of volatile media, non-volatile media, or the combinations thereof, such as static random access memory (SRAM), electrical erasable programmable read only memory (EEPROM), read only memory (ROM), magnetic memory, flash memory, magnetic disk or optical disk.

The power supply 906 is used to supply power to various components of the device 900. The power supply 906 may include a power management system, one or more power sources, and other components related to producing, managing and distributing the power.

The multimedia component 908 includes a screen acting as an output interface between the device 900 and the user. In some embodiments, the screen may be liquid crystal display (LCD) or touch panel (TP). If the screen includes a touch panel, the screen may be implemented as a touch screen to receive the input signal from the user. The touch panel includes one or more sensors to detect touching, slipping and other gestures on the touch panel. The sensors can not only detect the boundary of the touching or slipping, but also detect the duration and pressure related to the touching or slipping operation. In some embodiments, the multimedia component 908 includes a preposed camera or a rear camera. If the device 900 is in operation, such as in shooting pattern or video pattern, the preposed camera or the rear camera may receive the multimedia data outwards. Each of the preposed camera and the rear camera may be a fixed optical lens combination or of focus and the ability of optical zooming.

The audio component 910 is configured to output and/or input audio signal. For example, the audio component 910 includes a microphone (MIC). If the device 900 is in operation, such as calling, recording, or voice recognition, the microphone will be configured to receive the audio signal outwards. The received audio signal is further saved in the memory 904 or transmitted by the communication component 916. In some embodiments, the audio component 910 further includes a speaker, which is used to output audio signal.

I/O interface 912 is used to provide an interface between component 902 and peripheral interface module, which may be keyboard, ipod, buttons and the like. The buttons may include but not limited to, the mainpage button, volume button, start button and lock button.

The sensor component 914 includes one or more sensors, which are used to evaluate the status of the device 900. For example, the sensor component 914 can detect the on/off status of the device or the relative position of the components. For example, if the components are the display and the numpad of the device 900, the sensor component 914 may further detect the shift of the device 900 or one of its components, whether the user touches the device 900 or not, the position, the acceleration/deceleration and the temperature change of the device 900. The sensor component 914 may include proximity sensors, which are capable of detecting the existence of articles nearby without any contact. The sensor component 914 may further include optical sensors, such as CMOS or CCD image sensor to be used for imaging. In some embodiments, the sensor component 914 may further include acceleration, gyro, magnetic, pressure, and temperature sensors.

The communication component 916 is configured to facilitate the wired or wireless communication between the device 900 and other devices. The device 900 may access the wireless network based on communication standard, such as WiFi, 2G, 3G or any combination thereof. In an exemplary embodiment, the communication component 916 receives the broadcast signal or related information from external broadcast management system via broadcast channel. In an exemplary embodiment, the communication component 916 may further include nearfield communication (NFC) module to facilitate short range communication. For example, the NFC module may be implemented by radio frequency identification, infrared data, ultra wideband, Bluetooth or other technologies.

In the exemplary embodiments, the device 900 may be implemented by one or more of Application Specific Integrated Circuit (ASIC), digital signal processor (DSP), digital signal processing device, programmable logic device (PLD), field programmable gate array (FPGA), controller, micro controller, micro processor or other electrical component to perform the above methods.

In the exemplary embodiments, a non-transitory computer-readable store medium with instructions stored thereon may further be provided, such as the memory 904 including instructions, which may be executed by the processor 920 of the device 900 to perform the above methods. For example, the non-transitory computer-readable store medium may be ROM, random access memory (RAM), CD-ROM, magnetic tape, floppy disk, optical data store and the like.

In the embodiments of the disclosure, the set of information corresponding to the user state is acquired and subsequently shown by acquiring the current user state. In this way, the corresponding information is acquired and shown to the user automatically according to the user state, and the user need not search for the information, which enhances the efficiency to get the information.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It is easy for those skilled in the art to think of other implementations of the disclosure after thinking about the specification and practicing the embodiments disclosed herein. The application is intended to compass any variations, uses or adaptive changes, which comply with the general principles of the disclosure and include the common knowledge or customary technical means undisclosed in the disclosure. The specification and embodiments are only regarded as exemplary, and the actual scope of the disclosure is defined by the claims below.

It should be appreciated that the invention is not limited to the precise structure described above and shown in the drawings, and various modifications and changes may be made within the scope of the disclosure. The scope of the invention is only limited by the appended claims.

## Claims

1. A method for automatically obtaining information to output to a user, the method comprises, at a user device:
determining (101) whether an event is triggered by automatically monitoring triggering information sent by a wearable smart device;
obtaining the triggering information; and
determining the event is triggered when the triggering information is received by the user device;
if the event is triggered, automatically determining (102) the user's current state by selecting from a plurality of predefined states based on the triggering information;
transmitting a request to obtain information to a cloud server, wherein the request carries an identification of the user or an identification of the user device;
automatically obtaining (103) a set of information corresponding to the determined state, wherein the set of information corresponds to the identification of the user or the identification of the user device; and
outputting (104) the set of information to the user.

2. A method of claim 1, wherein determining whether an event is triggered further comprises:
detecting (2011) whether a system time of the user device reaches a predetermined time; and if the system time reaches a predetermined time, determining that the event is triggered.

3. The method of claim 2, further comprising:
querying a predefined relationship between a plurality of times and the plurality of user states using current system time of the user device, and obtaining the user's current state based on the relationship.

4. The method of claim 1, further comprising:
querying a predefined relationship between a plurality of triggering information and the plurality of user states using the triggering information; and
obtaining the current user state from the plurality of user states based on the relationship.

5. The method of any of claims 1 to 4, further comprising one or more of:
detecting (2012) whether a communicative connection with a wearable smart device is established, and if established, determining that the event is triggered; and
detecting (301) whether triggering information sent by a connected wearable smart device is received, and if received, determining that the event is triggered.

6. The method of any preceding claim, wherein the plurality of predefined states are user-defined, and include workday states, holiday states and health states.

7. The method of claim 6, wherein obtaining the set of information in accordance with the current user state comprises:
if the current user state is a workday state, the set of information is a first set of information comprising at least one or more of weather, news, or traffic information;
if the current user state is a holiday state, the set of information is a second set of information, different to the first set of information, comprising at least one or more of weather, shopping, dining, news, traffic, music or video information; and
if the current user state is a health state, the set of information is a third set of information, different to the first and/or second set of information, and obtained by searching (3033) for associated health information according to the user's prior obtained health data.

8. The method of any preceding claim, wherein determining whether an event is triggered comprises detecting (301) whether triggering information sent by a connected wearable smart device is received, and if received, determining that the event is triggered, wherein the method further comprises:
if the status of the connection with the wearable smart device is connected, and the state of the user device is a standby or power-off state, switching (402) it to an "on" state; or
if the status of the connection with the wearable smart device is disconnected, and the state of the user device is "on", switching (403) it to a standby or power-off state.

9. A device for automatically obtaining information to output to a user, wherein the device comprises:
a determining module (501), configured to determine whether an event is triggered by automatically monitoring triggering information;
a first acquisition module (502), configured to determine the user's current state by selecting from a plurality of predefined states based on the triggering information if the event is triggered;
a second acquisition module (503), configured to transmit a request to obtain information to a cloud server and automatically obtain a set of information corresponding to the determined state, wherein the request carries an identification of the user or an identification of the user device and the set of information corresponds to the identification of the user or the identification of the user device; and
an output module (504), configured to output the set of information to the user, wherein the determining module comprises a first determining module (5012) that is configured to monitor the triggering information sent by a wearable smart device; obtain the triggering information; and determine that the event is triggered when the triggering information is received by the device.

10. The device of claim 9, wherein the determining module further comprises:
a second determining module (5011), configured to detect whether the system time of the device reaches a predetermined time; and if the system time reaches a predetermined time, determine that the event is triggered.

11. The device of claim 9 or 10, wherein the first acquisition module comprises:
a first acquisition unit (5021), configured to query a predefined relationship between a plurality of times and the plurality of user states using current system time of the device, and obtaining the user's current state based on the relationship.

12. The device of any of claims 9 to 11, further comprising a second acquisition unit (5022), configured to query a predefined relationship between a plurality of triggering information and the plurality of user states using the triggering information; and obtain the current user state from the plurality of user states based on the relationship.

13. The device of any of claims 9 to 12, wherein:
the plurality of predefined states are user-defined, and include workday states, holiday states and health states; and
obtaining the set of information in accordance with the current user state comprises:
if the current user state is a workday state, the set of information is a first set of information comprising at least one or more of weather, news, or traffic information;
if the current user state is a holiday state, the set of information is a second set of information, different to the first set of information, comprising at least one or more of weather, shopping, dining, news, traffic, music or video information; and
if the current user state is a health state, the set of information is a third set of information, different to the first and/or second set of information, and obtained by searching (3033) for associated health information according to the user's prior obtained health data.

14. The device of claim 10, wherein the device further comprises:
a first switch module, configured to switch the device to an "on" state if the status of a connection with a wearable smart device is connected, and the state of the device is a standby of power off state; and
a second switch module, configured to switch to a standby or power-off state if the status of a connection with a wearable smart device is disconnected and the state of the device is an "on" state.

15. A device for information broadcast, for use in a smart TV or home audio equipment, the device comprising:
processor (920);
memory (904), used to store the instructions executable by the processor;
wherein the processor is configured to carry out the method of any of claims 1 to 8.

## Patentansprüche

1. Verfahren zum automatischen Erhalten von Informationen zur Ausgabe an einen Benutzer, wobei das Verfahren Folgendes an einer Benutzervorrichtung aufweist:
Bestimmen (101), ob ein Ereignis ausgelöst wird, durch automatisches Überwachen von durch eine tragbare intelligente Vorrichtung gesendeten Auslöseinformationen;
Erhalten der Auslöseinformationen und
Bestimmen, dass das Ereignis ausgelöst wird, wenn die Auslöseinformationen von der Benutzervorrichtung empfangen werden;
falls das Ereignis ausgelöst wird, automatisches Bestimmen (102) des aktuellen Zustands des Benutzers durch Auswählen aus mehreren vordefinierten Zuständen auf Basis der Auslöseinformationen;
Übertragen einer Anforderung zum Erhalten von Informationen an einen Cloud-Server, wobei die Anforderung eine Kennung des Benutzers oder eine Kennung der Benutzervorrichtung trägt;
automatisches Erhalten (103) eines dem bestimmten Zustand entsprechenden Informationssatzes, wobei der Informationssatz der Kennung des Benutzers oder der Kennung der Benutzervorrichtung entspricht; und
Ausgeben (104) des Informationssatzes an den Benutzer.

2. Verfahren nach Anspruch 1, wobei das Bestimmen, ob ein Ereignis ausgelöst wird, ferner Folgendes aufweist:
Erkennen (2011), ob eine Systemzeit der Benutzervorrichtung eine vorbestimmte Zeit erreicht; und, falls die Systemzeit eine vorbestimmte Zeit erreicht, Bestimmen, dass das Ereignis ausgelöst wird.

3. Verfahren nach Anspruch 2, das ferner Folgendes aufweist:
Abfragen einer vordefinierten Beziehung zwischen mehreren Zeiten und den mehreren Benutzerzuständen unter Verwendung aktueller Systemzeit der Benutzervorrichtung und Erhalten des aktuellen Zustands des Benutzers auf Basis der Beziehung.

4. Verfahren nach Anspruch 1, das ferner Folgendes aufweist:
Abfragen einer vordefinierten Beziehung zwischen mehreren Auslöseinformationen und mehreren Benutzerzuständen unter Verwendung der Auslöseinformationen und
Erhalten des aktuellen Benutzerzustands aus den mehreren Benutzerzuständen auf Basis der Beziehung.

5. Verfahren nach einem der Ansprüche 1 bis 4, das ferner eines oder mehr der Folgenden aufweist:
Erkennen (2012), ob eine kommunikationsfähige Verbindung mit einer tragbaren intelligenten Vorrichtung hergestellt wurde, und, falls sie hergestellt wurde, Bestimmen, dass das Ereignis ausgelöst wird; und
Erkennen (301), ob durch eine verbundene tragbare intelligente Vorrichtung gesendete Auslöseinformationen empfangen werden, und, falls empfangen, Bestimmen, dass das Ereignis ausgelöst wird.

6. Verfahren nach einem der vorhergehenden Ansprüche, wobei die mehreren vordefinierten Zustände benutzerdefiniert sind und Arbeitstagzustände, Urlaubszustände und Gesundheitszustände enthalten.

7. Verfahren nach Anspruch 6, wobei das Erhalten des Informationssatzes gemäß dem aktuellen Benutzerzustand Folgendes aufweist:
falls der aktuelle Zustand ein Arbeitstagzustand ist, ist der Informationssatz ein erster Informationssatz, der wenigstens eine oder mehr von Wetter-, Nachrichten- oder Verkehrsinformationen aufweist;
falls der aktuelle Zustand ein Urlaubszustand ist, ist der Informationssatz ein zweiter, vom ersten Informationssatz verschiedener Informationssatz, der wenigstens eine oder mehr von Wetter-, Einkaufs-, Essens-, Nachrichten-, Verkehrs-, Musik- oder Videoinformationen aufweist; und
falls der aktuelle Benutzerzustand ein Gesundheitszustand ist, ist der Informationssatz ein dritter Informationssatz, der vom ersten und/oder zweiten Informationssatz verschieden ist und durch Suchen (3033) nach zugehörigen Gesundheitsinformationen gemäß den früher erhaltenen Gesundheitsdaten des Benutzers erhalten wird.

8. Verfahren nach einem der vorhergehenden Ansprüche, wobei das Bestimmen, ob ein Ereignis ausgelöst wird, das Erkennen (301), ob durch eine verbundene tragbare intelligente Vorrichtung gesendete Auslöseinformationen empfangen werden, und, falls empfangen, das Bestimmen, dass das Ereignis ausgelöst wird, aufweist, wobei das Verfahren ferner Folgendes aufweist:
falls der Status der Verbindung mit der tragbaren intelligenten Vorrichtung erkannt wird und der Zustand der Benutzervorrichtung ein Standby- oder Ausschaltzustand ist, Umschalten (402) dieser auf einen "Ein"-Zustand; oder,
falls der Status der Verbindung mit der tragbaren intelligenten Vorrichtung unterbrochen ist und der Zustand der Benutzervorrichtung "ein" ist, Umschalten (403) dieser auf einen Standby- oder Ausschaltzustand.

9. Vorrichtung zum automatischen Erhalten von Informationen zur Ausgabe an einen Benutzer, wobei die Vorrichtung Folgendes aufweist:
ein Bestimmungsmodul (501), das konfiguriert ist zum Bestimmen, ob ein Ereignis ausgelöst wird, durch automatisches Überwachen von Auslöseinformationen;
ein erstes Erfassungsmodul (502), das konfiguriert ist zum Bestimmen des aktuellen Zustands durch Auswählen aus mehreren vordefinierten Zuständen auf Basis der Auslöseinformationen, falls das Ereignis ausgelöst wird;
ein zweites Erfassungsmodul (503), das konfiguriert ist zum Übertragen einer Anforderung zum Erhalten von Informationen an einen Cloud-Server und zum automatischen Erhalten eines dem bestimmten Zustand entsprechenden Informationssatzes, wobei die Anforderung eine Kennung des Benutzers oder eine Kennung der Benutzervorrichtung trägt und der Informationssatz der Kennung des Benutzers oder der Kennung der Benutzervorrichtung entspricht; und
ein Ausgabemodul (504), das konfiguriert ist zum Ausgeben des Informationssatzes an den Benutzer, wobei das Bestimmungsmodul ein erstes Bestimmungsmodul (5012) aufweist, das konfiguriert ist zum Überwachen der durch eine tragbare intelligente Vorrichtung gesendeten Auslöseinformationen; Erhalten der Auslöseinformationen und Bestimmen, dass das Ereignis ausgelöst wird, wenn die Auslöseinformationen durch die Vorrichtung empfangen werden.

10. Vorrichtung nach Anspruch 9, wobei das Bestimmungsmodul ferner Folgendes aufweist:
ein zweites Bestimmungsmodul (5011), das konfiguriert ist zum Erkennen, ob die Systemzeit der Vorrichtung eine vorbestimmte Zeit erreicht; und, falls die Systemzeit eine vorbestimmte Zeit erreicht, Bestimmen, dass das Ereignis ausgelöst wird.

11. Vorrichtung nach Anspruch 9 oder 10, wobei das erste Erfassungsmodul Folgendes aufweist:
eine erste Erfassungseinheit (5021), die konfiguriert ist zum Abfragen einer vordefinierten Beziehung zwischen mehreren Zeiten und den mehreren Benutzerzuständen unter Verwendung aktueller Systemzeit der Vorrichtung und Erhalten des aktuellen Zustands des Benutzers auf Basis der Beziehung.

12. Vorrichtung nach einem der Ansprüche 9 bis 11, die ferner eine zweite Erfassungseinheit (5022) aufweist, die konfiguriert ist zum Abfragen einer vordefinierten Beziehung zwischen mehreren Auslöseinformationen und mehreren Benutzerzuständen unter Verwendung der Auslöseinformationen; und Erhalten des aktuellen Benutzerzustands aus den mehreren Benutzerzuständen auf Basis der Beziehung.

13. Vorrichtung nach einem der Ansprüche 9 bis 12, wobei:
die mehreren vordefinierten Zustände benutzerdefiniert sind und Arbeitstagzustände, Urlaubszustände und Gesundheitszustände enthalten; und
Erhalten des Informationssatzes gemäß dem aktuellen Benutzerzustand Folgendes aufweist:
falls der aktuelle Benutzerzustand ein Arbeitstagzustand ist, ist der Informationssatz ein erster Informationssatz, der wenigstens eine oder mehr von Wetter-, Nachrichten- oder Verkehrsinformationen aufweist;
falls der aktuelle Zustand ein Urlaubszustand ist, ist der Informationssatz ein zweiter, vom ersten Informationssatz verschiedener Informationssatz, der wenigstens eine oder mehr von Wetter-, Einkaufs-, Essens-, Nachrichten-, Verkehrs-, Musik- oder Videoinformationen ist; und,
falls der aktuelle Benutzerzustand ein Gesundheitszustand ist, ist der Informationssatz ein dritter Informationssatz, der vom ersten und/oder zweiten Informationssatz verschieden ist und durch Suchen (3033) nach zugehörigen Gesundheitsinformationen gemäß den früher erhaltenen Gesundheitsdaten des Benutzers erhalten wird.

14. Vorrichtung nach Anspruch 10, wobei die Vorrichtung ferner Folgendes aufweist:
ein erstes Schaltmodul, das konfiguriert ist zum Umschalten der Vorrichtung auf einen "Ein"-Zustand, falls der Status einer Verbindung mit einer tragbaren intelligenten Vorrichtung verbunden ist und der Zustand der Vorrichtung ein Standby- oder Ausschaltzustand ist; und
ein zweites Schaltmodul, das konfiguriert ist zum Umschalten auf einen Standby- oder Ausschaltzustand, falls der Status einer Verbindung mit einer tragbaren intelligenten Vorrichtung unterbrochen ist und der Zustand der Vorrichtung ein "Ein"-Zustand ist.

15. Vorrichtung für ein Informations-Broadcast zur Verwendung in einem Smart-TV oder einer Heimaudio-Ausrüstung, wobei die Vorrichtung Folgendes aufweist:
einen Prozessor (920);
einen Speicher (904), der zum Speichern der durch den Prozessor ausführbaren Anweisungen verwendet wird;
wobei der Prozessor zum Durchführen des Verfahrens nach einem der Ansprüche 1 bis 8 konfiguriert ist.

## Revendications

1. Procédé d'obtention automatique d'informations destinées à être produites en sortie à destination d'un utilisateur, le procédé comprenant, au niveau d'un dispositif utilisateur :
la détermination (101) qu'un événement est déclenché ou non par la surveillance automatique d'informations de déclenchement envoyées par un dispositif intelligent pouvant être porté sur soi ;
l'obtention des informations de déclenchement ; et
la détermination que l'événement est déclenché quand les informations de déclenchement sont reçues par le dispositif utilisateur ;
si l'événement est déclenché, la détermination automatique (102) de l'état courant de l'utilisateur par une sélection parmi une pluralité d'états prédéfinis en fonction des informations de déclenchement ;
la transmission d'une demande d'obtention d'informations à un serveur de nuage informatique, la demande comportant une identification de l'utilisateur ou une identification du dispositif utilisateur ;
l'obtention automatique (103) d'un ensemble d'informations correspondant à l'état déterminé, l'ensemble d'informations correspondant à l'identification de l'utilisateur ou à l'identification du dispositif utilisateur ; et
la production en sortie (104) de l'ensemble d'informations à destination de l'utilisateur.

2. Procédé selon la revendication 1, dans lequel la détermination qu'un événement est déclenché comprend en outre :
la détection (2011) qu'un temps système du dispositif utilisateur atteint un temps prédéterminé ; et si le temps système atteint un temps prédéterminé, la détermination que l'événement est déclenché.

3. Procédé selon la revendication 2, comprenant en outre :
l'interrogation d'une relation prédéfinie entre une pluralité de temps et la pluralité des états d'utilisateur en utilisant le temps système courant du dispositif utilisateur, et l'obtention de l'état courant de l'utilisateur en fonction de la relation.

4. Procédé selon la revendication 1, comprenant en outre :
l'interrogation d'une relation prédéfinie entre une pluralité d'informations de déclenchement et la pluralité des états d'utilisateur en utilisant les informations de déclenchement ; et
l'obtention de l'état d'utilisateur courant à partir de la pluralité d'états d'utilisateur en fonction de la relation.

5. Procédé selon l'une quelconque des revendications 1 à 4, comprenant en outre une ou plusieurs de :
la détection (2012) qu'une connexion de communication avec un dispositif intelligent pouvant être porté sur soi est établie ou non, et si elle est établie, la détermination que l'événement est déclenché ; et
la détection (301) que des informations de déclenchement envoyées par un dispositif intelligent pouvant être porté sur soi connecté sont reçues ou non, et si elles sont reçues, la détermination que l'événement est déclenché.

6. Procédé selon l'une quelconque des revendications précédentes, dans lequel la pluralité d'états prédéfinis sont définis par l'utilisateur, et comprennent des états de jours ouvrables, des états de congés et des états de santé.

7. Procédé selon la revendication 6, dans lequel l'obtention de l'ensemble d'informations conformément à l'état d'utilisateur courant comprend :
si l'état d'utilisateur courant est un état de jour ouvrable, l'ensemble d'informations est un premier ensemble d'informations comprenant au moins l'une ou plusieurs d'informations météorologiques, d'actualités ou de circulation ;
si l'état d'utilisateur courant est un état de congés, l'ensemble d'informations est un deuxième ensemble d'informations, différent du premier ensemble d'informations, comprenant au moins l'une ou plusieurs d'informations météorologiques, de commerces, de restaurants, d'actualités, de circulation, de musique ou de vidéo ; et
si l'état d'utilisateur courant est un état de santé, l'ensemble des informations est un troisième ensemble d'informations, différent du premier et/ou deuxième ensemble d'informations, et obtenu par recherche (3033) d'informations de santé associées conformément à des données de santé de l'utilisateur obtenues antérieurement.

8. Procédé selon l'une quelconque des revendications précédentes dans lequel la détermination qu'un événement est déclenché comprend la détection (301) que des informations de déclenchement envoyées par un dispositif intelligent pouvant être porté sur soi connecté sont reçues ou non, et si elles sont reçues, la détermination que l'événement est déclenché, le procédé comprenant en outre :
si l'état de la connexion avec le dispositif intelligent pouvant être porté sur soi est un état connecté, et l'état du dispositif utilisateur est un état de veille ou d'arrêt, sa commutation (402) sur un état de marche ; ou
si l'état de la connexion avec le dispositif intelligent pouvant être porté sur soi est un état déconnecté, et l'état du dispositif utilisateur est un état de marche, sa commutation (403) sur un état de veille ou d'arrêt.

9. Dispositif d'obtention automatique d'informations destinées à être produites en sortie à destination d'un utilisateur, le dispositif comprenant :
un module de détermination (501), configuré pour déterminer qu'un événement est déclenché ou non par surveillance automatique d'informations de déclenchement ;
un premier module d'acquisition (502), configuré pour déterminer l'état courant de l'utilisateur par une sélection parmi une pluralité d'états prédéfinis en fonction des informations de déclenchement si l'événement est déclenché ;
un second module d'acquisition (503), configuré pour transmettre une demande d'obtention d'informations à un serveur de nuage informatique et obtenir automatiquement un ensemble d'informations correspondant à l'état déterminé, dans lequel la demande comporte une identification de l'utilisateur ou une identification du dispositif utilisateur et l'ensemble d'informations correspond à l'identification de l'utilisateur ou à l'identification du dispositif utilisateur ; et
un module de sortie (504), configuré pour produire en sortie l'ensemble d'informations à destination de l'utilisateur, dans lequel le mode de détermination comprend un premier module de détermination (5012) qui est configuré pour surveiller les informations de déclenchement envoyées par un dispositif intelligent pouvant être porté sur soi ; obtenir les informations de déclenchement ; et déterminer que l'événement est déclenché quand les informations de déclenchement sont reçues par le dispositif.

10. Dispositif selon la revendication 9, dans lequel le module de détermination comprend en outre :
un second module de détermination (5011), configuré pour détecter que le temps système du dispositif atteint ou non un temps prédéterminé ; et si le temps système atteint un temps prédéterminé, déterminer que l'événement est déclenché.

11. Dispositif selon la revendication 9 ou 10, dans lequel le premier module d'acquisition comprend :
une première unité d'acquisition (5021), configurée pour interroger une relation prédéfinie entre une pluralité de temps et la pluralité d'états d'utilisateur en utilisant le temps système courant du dispositif et obtenant l'état courant du dispositif en fonction de la relation.

12. Dispositif selon l'une quelconque des revendications 9 à 11, comprenant en outre une seconde unité d'acquisition (5022), configurée pour interroger une relation prédéfinie entre une pluralité d'informations de déclenchement et la pluralité des états d'utilisateur en utilisant les informations de déclenchement ; et obtenir l'état d'utilisateur courant à partir de la pluralité d'états d'utilisateur en fonction de la relation.

13. Dispositif selon l'une quelconque des revendications 9 à 12, dans lequel :
la pluralité d'états prédéfinis est définie par l'utilisateur, et comporte des états de jours ouvrables, des états de congés et des états de santé ; et
l'obtention de l'ensemble d'informations conformément à l'état d'utilisateur courant comprend :
si l'état d'utilisateur courant est un état de jour ouvrable, l'ensemble d'informations est un premier ensemble d'informations comprenant au moins l'une ou plusieurs d'informations météorologiques, d'actualités ou de circulation ;
si l'état d'utilisateur courant est un état de congés, l'ensemble d'informations est un deuxième ensemble d'informations, différent du premier ensemble d'informations, comprenant au moins l'une ou plusieurs d'informations météorologiques, de commerces, de restaurants, d'actualités, de circulation, de musique ou de vidéo ; et
si l'état d'utilisateur courant est un état de santé, l'ensemble des informations est un troisième ensemble d'informations, différent du premier et/ou deuxième ensemble d'informations, et obtenu par recherche (3033) d'informations de santé associées conformément à des données de santé de l'utilisateur obtenues antérieurement.

14. Dispositif selon la revendication 10, le dispositif comprenant en outre :
un premier module de commutation, configuré pour commuter le dispositif sur un état de marche si l'état d'une connexion avec un dispositif intelligent pouvant être porté sur soi est l'état connecté, et l'état du dispositif est un état de veille d'arrêt ; et
un second module de commutation, configuré pour commuter sur un état de veille ou d'arrêt si l'état d'une connexion avec un dispositif intelligent pouvant être porté sur soi est l'état déconnecté et l'état du dispositif est un état de marche.

15. Dispositif de diffusion d'informations, destinée à être utilisé dans un téléviseur ou équipement audio domestique intelligent, le dispositif comprenant :
un processeur (920) ;
une mémoire (904), destinée à mémoriser les instructions exécutables par le processeur ;
dans lequel le processeur est configuré pour réaliser le procédé selon l'une quelconque des revendications 1 à 8.
